Europäisches Patentamt

European Patent Office

Office européen des brevets

(11) Numéro de publication: **0 496 175 B1**

(12) **FASCICULE DE BREVET EUROPEEN**

(45) Date de publication de fascicule du brevet: **10.05.95**  (51) Int. Cl.⁶: **B60G 7/02**, B60G 21/055

(21) Numéro de dépôt: **91403470.7**

(22) Date de dépôt: **19.12.91**

(54) **Train arrière pour véhicules automobiles.**

(30) Priorité: **22.01.91 FR 9100672**

(43) Date de publication de la demande:
**29.07.92 Bulletin 92/31**

(45) Mention de la délivrance du brevet:
**10.05.95 Bulletin 95/19**

(84) Etats contractants désignés:
**DE ES GB IT**

(56) Documents cités:
EP-A- 0 131 795          EP-A- 0 170 220
EP-A- 0 252 805          EP-A- 0 324 663
EP-A- 0 404 627          EP-A- 0 439 978
US-A- 4 966 384

(73) Titulaire: **AUTOMOBILES PEUGEOT**
**75, avenue de la Grande Armée**
**F-75116 Paris (FR)**

Titulaire: **AUTOMOBILES CITROEN**
**62 Boulevard Victor-Hugo**
**F-92200 Neuilly-sur-Seine (FR)**

(72) Inventeur: **Guillaume, Alain**
**23, Rue du Chat Noir**
**F-95000 Vaureal (FR)**

(74) Mandataire: **Fabien, Henri et al**
**PSA Peugeot Citroen**
**Département OPS/BPI**
**18, rue des Fauvelles**
**F-92250 La Garenne-Colombes (FR)**

Rank Xerox (UK) Business Services
(3.10/3.09/3.3.3)

EP 0 496 175 B1

## Description

L'invention est relative à un train de roues arrière pour véhicule automobile du type comprenant des éléments de guidage des roues articulés sur un berceau intermédiaire rigide, lequel est relié à la caisse du véhicule par des moyens de liaison élastiques comprenant un dispositif de liaison antérieur situé en avant des roues et un dispositif de liaison postérieur, l'un de ces dispositifs comprenant deux attaches élastiques latérales à effet directeur qui présentent chacune une faible flexibilité dans une direction horizontale reliant l'attache à un axe vertical situé en arrière de l'axe des roues et une grande flexibilité dans la direction horizontale perpendiculaire à cette direction.

On connaît des trains arrière du genre défini ci-dessus dans lesquels le dispositif de liaison antérieur comporte des attaches à effet directeur, ainsi que des trains arrière dans lesquels le dispositif de liaison postérieur comporte des attaches à effet directeur (voir par exemple EP-A-0404627). Ces dispositifs sont généralement agencés de manière à exercer un effet sous-vireur quand le véhicule effectue un virage. Ils présentent cependant l'inconvénient d'une fréquence propre élevée en rotation du train, nuisible au confort du véhicule.

On connaît d'après le brevet EP-A-0252805 un train arrière de véhicule relié à la caisse par quatre attaches de flexibilités différentes, le train étant pivotant autour d'un axe vertical situé au milieu de l'intervalle entre les attaches postérieures; cependant les attaches ont la même flexibilité dans toutes les directions du plan horizontal. Le dispositif comporte en outre des moyens élastiques précontraints pour que le train ne pivote que sous l'action d'un effort transversal dépassant un seuil.

L'invention a pour objet un train arrière sous-vireur admettant une fréquence propre en rotation conforme aux exigences de confort du véhicule.

L'invention a pour objet un train du type précité caractérisé en ce que le dispositif de liaison antérieur ainsi que le dispositif de liaison postérieur comportent chacun deux attaches élastiques latérales à effet directeur, les directions horizontales correspondant à une faible flexibilité des quatre attaches convergeant vers un même axe vertical (I) situé en arrière de l'axe des roues, dans le plan de symétrie du véhicule. Cet axe vertical est situé à l'intérieur ou à la limite du quadrilatère défini par les quatre attaches.

On notera dès à présent qu'on parvient à abaisser la fréquence propre en rotation du train en optimisant pour chaque paire latérale d'attaches le rapport entre la faible flexibilité et la flexibilité dans la direction perpendiculaire, et en optimisant pour chaque paire latérale d'attaches l'angle que fait la direction de faible flexibilité avec l'axe du véhicule, ce qui revient à optimiser la position du point I.

De préférence, l'invention se caractérise aussi par le fait que chaque attache a effet directeur est constituée par un bloc élastique pris en sandwich entre deux organes parallèles orientés dans la direction de grande flexibilité de l'attache.

L'invention se caractérise, selon une variante préférée, par le fait que chaque attache à effet directeur est constituée par une cale alvéolée.

De préférence, l'invention se caractérise également par le fait que les blocs élastiques ainsi que les cales alvéolées sont munis d'armatures internes.

Un exemple de réalisation sera décrit avec références aux dessins annexés:
- la Figure 1 est une vue schématique en plan d'un train arrière selon l'invention, un seul côté du train, qui est symétrique par rapport au plan médian, étant représenté;
- la Figure 2 montre schématiquement le fonctionnement du train de la figure 1;
- la Figure 3 est une vue de dessous d'une attache élastique à effet directeur;
- la Figure 4 est une vue en coupe suivant IV-IV de la figure 3;
- la Figure 5 est une vue en bout d'une attache élastique à effet directeur;
- la Figure 6 est une vue en coupe suivant VI-VI de la figure 5.

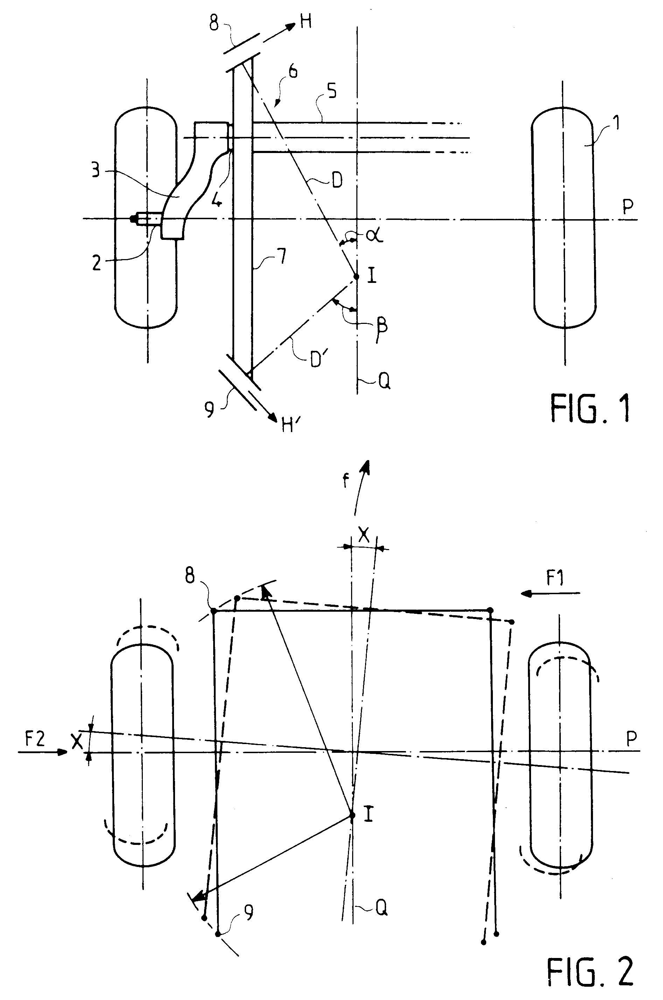

Le train arrière pour véhicule automobile, représenté à la figure 1, comprend deux roues 1 dont les axes se trouvent sensiblement dans un même plan vertical P perpendiculaire au plan de symétrie longitudinal Q du véhicule. Chaque roue est montée sur une fusée 2 portée par l'extrémité arrière d'un bras tiré 3 servant au guidage de la roue. L'extrémité avant de chaque bras 3 est fixée à l'extrémité correspondante d'une traverse 4 qui tourillonne dans une traverse 5 d'un berceau intermédiaire 6.

Le berceau 6 comprend outre la traverse 5 deux longerons 7 symétriques par rapport au plan Q, fixés aux extrémités respectives de cette traverse. L'extrémité avant de chaque longeron est reliée à la caisse par une attache élastique à effet directeur 8. L'extrémité arrière du longeron 7 est reliée à la caisse par une attache élastique à effet directeur 9.

Les longerons 7 pourraient comporter des nervures de rigidification, afin que leur propre flexibilité soit négligeable devant celle des attaches.

Chaque attache 8 présente une direction D de faible flexibilité et une direction H de grande flexibilité perpendiculaire à la direction D; les deux directions D se croisent dans le plan Q en un point I situé en arrière du plan P.

Chaque attache 9 présente une direction D' de faible flexibilité et une direction H' de grande flexibilité perpendiculaire à la direction D'; les deux direction D' se croisent au point I.

Le point I est situé de préférence à l'intérieur du quadrilatère formé par les quatre attaches 8 et 9.

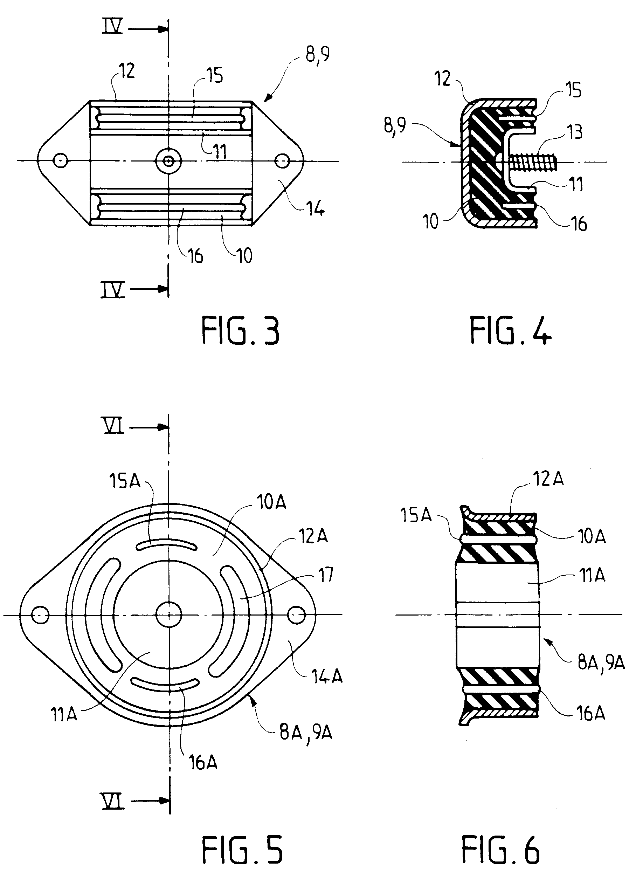

Les figures 3 et 4 représentent un exemple d'attache 8 ou 9. Cette attache comprend un bloc rectiligne 10 à section transversale en U en matière élastomère pris en sandwich entre deux armatures inférieure 11 et supérieure 12 auxquelles il est lié par adhérisation. L'armature 11 est fixée au longeron 7 correspondant au moyen d'une vis 13; des pattes 14 solidaires de l'armature 12 sont fixées à la caisse du véhicule. Les références 15 et 16 représentent des armatures métalliques internes.

L'attache présente, suivant son axe longitudinal correspondant au travail en cisaillement de l'élastomère, une grande flexibilité et suivant la direction perpendiculaire correspondant à la compression de l'élastomère, une faible flexibilité.

Les figures 5 et 6 montrent en variante une cale cylindrique alvéolée 8A ou 9A. Un bloc cylindrique annulaire 10A, en matière élastomère, est adhérisé à un moyeu 11A et à une enveloppe extérieure 12A. L'enveloppe 12A porte des pattes 14A de fixation à la caisse. La fixation au longeron est assurée par une vis traversant le moyeu 11A. Deux alvéoles arqués 17 diamétralement opposés sont prévus dans le bloc 10A dans la direction de grande flexibilité H ou H'. Les références 15A et 16A représentent deux armatures métalliques internes disposées dans la direction de faible flexibilité D ou D'.

En fonctionnement (voir figure 2), lors d'un virage par exemple à droite (selon la flèche f) la force centrifuge F1 s'applique sur la caisse et le berceau 6 et une force de réaction opposée F2 est appliquée par la chaussée sur les roues. Grâce à l'effet directeur des attaches 8 et 9, le berceau pivote d'un petit angle de micro-braquage X dans le sens sous-vireur autour de l'axe vertical passant par le point I comme indiqué en trait interrompu sur la figure 2.

Afin de diminuer la fréquence propre en rotation du train (ce qui aura pour effet d'améliorer le confort vibratoire du véhicule) et d'augmenter le phénomène de rotation du train, il faut agir simultanément sur les paramètres suivants:

. rapport de rigidité des cales arrière

$$\left( \frac{KD'}{KH'} \right) \; ;$$

. rapport de rigidité des cales avant

$$\left( \frac{KD}{KH} \right) \; ;$$

ces deux rapports doivent être élevés tout en gardant des rigidités KH faibles.

$$\frac{\left( \dfrac{KD'}{KH'} \right)}{\left( \dfrac{KD}{KH} \right)}$$

rapport de rigidité entre les cales

avant et arrière à optimiser pour

favoriser la rotation du train;

.  affiner la position du centre instantané de rotation ce qui déterminera les angles $\alpha$ et $\beta$ que font avec l'axe de symétrie du véhicule les directions de faible flexibilité;

.  les angles $\alpha$ et $\beta$ dépendent de la géométrie du train.

Il va de soi que l'invention n'est pas limitée au mode de réalisation décrit et représenté, mais au contraire en couvre toutes les variantes qui entrent dans le cadre des revendications, c'est ainsi qu'on pourrait varier les attaches à condition qu'elles présentent un grand rapport entre les flexibilités dans les directions de grande et de faible flexibilité; on pourrait également varier les moyens de rigidification du berceau en prévoyant par exemple des barres diagonales.

**Revendications**

**1.**  Train de roues arrière pour véhicule automobile du type comprenant des éléments (3) de guidage des roues (1) articulés sur un berceau intermédiaire rigide (6) lequel est relié à la caisse du véhicule par des moyens de liaison élastiques (8,9) comprenant un dispositif de liaison antérieur (8) situé en avant des roues et un dispositif de liaison postérieur (9), l'un de ces dispositif comprenant deux attaches élastiques latérales (8 ou 9) à effet directeur qui présentent chacune une faible flexibilité dans une direction horizontale (D ou D') reliant l'attache à un axe vertical (I) situé en arrière de l'axe des roues et une grande flexibilité dans la direction horizontale (H ou H') perpendiculaire à cette direction, caractérisé en ce que le dispositif de liaison antérieur (8) ainsi que le dispositif de liaison postérieur (9) comportent chacun deux attaches élastiques latérales à effet directeur, les directions horizontales correspondant à une faible flexibilité des quatre attaches convergeant vers un même axe vertical (I) situé en arrière des roues, dans le plan de symétrie (Q) du véhicule, à l'intérieur ou à la limite du quadrilatère défini par les quatre attaches (8,9).

**2.**  Train de roues arrière selon la revendication 1, caractérisé en ce que chaque attache à effet directeur (8 ou 9) est constituée par un bloc élastique (10) pris en sandwich entre deux organes de support parallèles (11,12) qui sont orientés dans la direction (H ou H') de grande flexibilité de l'attache.

**3.**  Train de roues arrière suivant la revendication 1, caractérisé en ce que chaque attache à effet directeur est constituée par une cale alvéolée (8A ou 9A).

**4.**  Train de roues arrière suivant la revendication 2 ou 3, caractérisé en ce que chaque attache est munie d'armatures internes (15,16; 15A,16A).

**Claims**

**1.**  A rear wheel and axle set for a motor vehicle, of the type comprising elements (3) for steering the wheels (1) articulated on a rigid intermediate cradle (6) which is connected to the vehicle body by resilient connection means (8, 9) comprising a front connection device (8) located in front of the wheels and a rear connection device (9), one of these devices comprising two lateral resilient fasteners (8 or 9) with steering effect which each have low flexibility in one horizontal direction (D or D' ) connecting the fastener to a vertical axis (I) located behind the axis of the wheels, and high flexibility in the horizontal direction (H or H' ) perpendicular to that direction, characterised in that the front connection device (8) and the rear connection device (9) each comprise two lateral resilient fasteners with steering effect constituted by blocks equipped with inner reinforcements and/or cells, suitable for increasing the ratios of maximum and minimum rigidity in the horizontal plane, rear blocks and front blocks, the horizontal directions corresponding to low flexibility of the four fasteners converging towards the same vertical axis (I) located behind the wheels, in the plane of symmetry (Q) of the vehicle, inside or on the edge of the quadrilateral defined by the four fasteners (8, 9).

2. A rear wheel and axle set according to Claim 1, characterised in that each fastener with steering effect (8 or 9) is constituted by a resilient block (10) sandwiched between two parallel support elements (11, 12) which are oriented in the direction (H or H' ) of high flexibility of the fastener.

3. A rear wheel and axle set according to Claim 1, characterised in that each fastener with steering effect is constituted by an alveolate block (8A or 9A).

4. A rear wheel and axle set according to Claim 2 or 3, characterised in that each fastener is equipped with internal reinforcements (15, 16; 15A, 16A).

**Patentansprüche**

1. Hinterachse für Kraftfahrzeuge vom Typ mit Führungselementen (3) von Rädern (1), die auf einem starren Zwischenträger (6) angelenkt sind, der mit dem Fahrzeugrahmen durch elastische Verbindungseinrichtungen (8, 9) verbunden ist, mit einer vorderen Verbindungsvorrichtung (8), die vor den Rädern angeordnet ist, und einer hinteren Verbindungsvorrichtung (9), wobei eine der Vorrichtungen zwei elastische seitliche Verbindungselemente (8 oder 9) mit Richtungseffekt aufweist, die jeweils eine geringe Flexibilität in eine horizontale Richtung (D oder D'), die das Verbindungselement mit einer vertikalen Achse (I) verbindet, die hinter der Achse der Räder angeordnet ist, und eine große Flexibilität in die horizontale Richtung (H oder H') aufweisen, die senkrecht zu dieser Richtung ist, dadurch gekennzeichnet, daß die vordere Verbindungsvorrichtung (8) sowie die hintere Verbindungsvorrichtung (9) jeweils zwei elastische Längsverbindungselemente mit Richtungseffekt aufweist, die aus Keilen gebildet sind, die mit inneren Armaturen und/oder Aussparungen versehen sind, die geeignet sind, die Verhältnisse von maximaler und minimaler Steifheit in der horizontalen Ebene der hinteren und vorderen Keile anzuheben, wobei die horizontalen Richtungen, die einer geringen Flexibilität der vier Verbindungselemente entsprechen, zu einer selben vertikalen Achse (I) konvergieren, die sich hinter den Rädern befindet, in der Symmetrieebene (Q) des Fahrzeugs, im Inneren oder an der Grenze des Vierecks, das von den vier Verbindungselementen (8, 9) gebildet wird.

2. Hinterachse nach Anspruch 1, dadurch gekennzeichnet, daß jedes Verbindungselement mit Richtungseffekt (8 oder 9) aus einem elastischen Block (10) gebildet wird, der zwischen zwei parallelen Trägerorganen (11, 12) eingeklemmt oder eingezwängt ist, die in die Richtung (H oder H') von großer Flexibilität des Verbindungselements ausgerichtet sind.

3. Hinterachse nach Anspruch 1, dadurch gekennzeichnet, daß jedes Verbindungselement mit Richtungseffekt aus einem mit Aussparungen versehenen Keil (8A oder 9A) gebildet ist.

4. Hinterachse nach Anspruch 2 oder 3, dadurch gekennzeichnet, daß jedes Verbindungselement mit inneren Armaturen (15, 16; 15A, 16A) versehen ist.

FIG. 1

FIG. 2

FIG. 3

FIG. 4

FIG. 5

FIG. 6